# FASCICULE DE BREVET EUROPEEN

(11) **EP 2 682 595 B1**
(45) Date de publication et mention de la délivrance du brevet: **17.12.2014**
(21) Numéro de dépôt: 13174053.2
(22) Date de dépôt: 27.06.2013
(51) Int. Cl.: F03B 3/12, F03B 17/06

(54) **Dispositif de production d'energie electrique d'un circuit de transport de fluide comprenant une turbine**
Stromerzeugungsvorrichtung eines Fluidtransportkreislaufs, der eine Turbine umfasst
Device for producing electric energy for a fluid transport circuit comprising a turbine

(30) Priorité: 04.07.2012 FR 1256419; 12.09.2012 FR 1258542
(43) Date de publication de la demande: 08.01.2014
(73) Titulaire: Maillot, Joseph Lucay, 93210 La Plaine Saint Denis (FR)
(72) Inventeur: Maillot, Joseph-Luçay, 93210 LA PLAINE SAINT DENIS (FR)
(74) Mandataire: Deschamps, Samuel

(56) Documents cités:
- US-A- 4 582 255
- US-A1- 2008 136 191

## Description

### DOMAINE TECHNIQUE DE L'INVENTION

L'invention concerne un dispositif de production d'énergie mécanique installé entre deux sections d'un circuit de transport de fluide comprenant une turbine. L'invention concerne également le circuit associé.

L'invention trouve une application particulièrement avantageuse pour produire de l'énergie mécanique à partir d'un circuit de transport de fluide sous pression (réseau urbain, domestique, industriel ou agricole). L'invention peut également être appliquée au domaine automobile notamment pour les véhicules hybrides ou électriques comportant un circuit de transport de fluide tel que le véhicule présenté dans le brevet français N°2 879 970.

### ETAT DE LA TECHNIQUE

Il existe plusieurs types de turbines mises en mouvement par la circulation d'un fluide sous pression. L'axe de ces turbines est relié à un moyen de transmission de l'énergie mécanique pour transmettre l'énergie mécanique de rotation de la turbine à un système extérieur. Le système extérieur peut être un moyen de traction d'un véhicule, ou un moyen d'entrainement d'une chaine de montage, ou encore un moyen de pompage. En fait, cette énergie mécanique peut être utilisée de toutes les méthodes connues, et le moyen de transmission de l'énergie mécanique est alors adapté à l'application. Le moyen de transmission peut, par exemple, être une courroie, une chaîne ou un système d'engrenages par pignons.

Ces turbines peuvent être disposées entre deux sections d'un circuit de transport de fluide sous pression. Cependant, la perte de charge engendrée par l'entrainement de la turbine créé un déséquilibre de pression entre ces deux sections. Cette contrainte limite les possibilités de réutilisation de la pression du circuit de transport de fluide sous pression ainsi que le nombre de turbines qui peuvent être installées sur le circuit de transport de fluide.

Un dispositif représentant l'art antérieur est décrit dans le document US 2008/0136191 A1.

### OBJET DE L'INVENTION

L'invention propose de remédier à cet inconvénient à l'aide d'un dispositif de production d'énergie mécanique à partir d'un circuit de transport de fluide, ledit dispositif comportant un carter comprenant au moins une arrivée de fluide et une sortie d'écoulement reliées étanchement au circuit de transport de fluide, une roue mobile en rotation à l'intérieur du carter autour de son axe, et un moyen de transmission d'énergie entrainé par l'axe, le dispositif comportant en outre un canal central ménagé circulairement autour de la roue, et un couteau de répartition contenu dans le canal central s'entendant radialement par rapport à la roue et adapté circulairement autour de la roue, le couteau de répartition comportant deux faces, de profil curviligne, reliées par un fil apte à répartir le fluide provenant de l'au moins une arrivée de fluide sur les deux faces, chaque face comportant au moins une arrête formant une butée d'appui et s'étendant depuis le fil jusqu'à un bord de la face.

L'invention permet de maintenir une pression quasi-constante entre l'arrivée de fluide et la sortie d'écoulement tout en produisant de l'énergie mécanique par l'intermédiaire de la turbine. Plusieurs dispositifs de production d'énergie de l'invention peuvent ainsi être connectés en série ou en parallèle dans un circuit de transport de fluide sous pression et multiplier l'énergie mécanique produite.

Avantageusement, la hauteur du couteau de répartition est légèrement inférieure à la profondeur du canal central de la roue. Le canal central limite les projections de fluide sur les bords de la roue proches du couteau de répartition augmentant ainsi le rendement de la poussée du fluide sur la roue. De plus, afin de limiter encore les projections, le dispositif peut comporter des moyens pour relier étanchement l'arrivée de fluide et le canal central de la roue. De préférence, le canal central comporte des parois latérales qui ont une forme curviligne s'étendant dans le prolongement des faces du couteau de répartition. De préférence, le canal central comporte deux espaces semi tubulaires de circulation du fluide de part et d'autre du couteau de répartition

Avantageusement, chaque arrête est orientée radialement par rapport au fil avec un angle compris entre 30 et 60 degrés. Cette orientation de l'arrête permet d'une part à la roue d'emmagasiner une partie de l'énergie cinétique du fluide et d'autre part de limiter le freinage du fluide par la butée d'appui.

Avantageusement, le fil comporte une encoche dont un bord forme une intersection entre les butées d'appui des arrêtes reliant les faces. L'encoche du fil améliore la répartition du fluide entre les deux faces du couteau puisque ce n'est plus simplement le fil qui effectue la répartition mais également le bord d'intersection entre les butées d'appui.

Avantageusement, chaque face comporte des dentures faisant saillie de la paroi de la face. La denture augmente le rendement de la poussée du fluide sur la roue.

Avantageusement, chaque face comportant plusieurs arrêtes, chaque section d'une face disposée entre une première arrête et une deuxième arrête comporte une pente dont le point haut est situé à l'intersection entre la première arrête et le fil et dont le point bas est situé à l'intersection entre la deuxième arrête et le bord de la face.

Avantageusement, la roue comporte des canaux latéraux prenant naissance à l'intersection entre la deuxième arrête et le bord de la face et débouchant sur un coté de la roue.

Avantageusement, chaque canal latéral comportant une section d'entrée au niveau de l'intersection entre la deuxième arrête et le bord de la face et une section de sortie au niveau du coté de la roue, la section d'entrée est supérieure à la section de sortie. L'amincissement du canal latéral réalise un effet Venturi qui augmente la pression du fluide au niveau de la section de sortie pour utiliser la poussée du fluide au niveau de la section de sortie comme moyen d'entrainement de la roue.

Avantageusement, une sortie de chaque canal latéral comporte une tuyère d'évacuation, fixée sur le coté de la roue et orientée suivant la direction inverse du sens de déplacement de la roue. L'orientation de la sortie du canal latéral permet d'entrainer la roue par un effet de poussé par réaction du fluide.

Avantageusement, chaque canal latéral comporte une rainure de guidage ménagée à l'intérieur du canal latéral suivant une disposition hélicoïdale. La rainure permet de guider les déplacements du fluide à l'intérieur du canal latéral à la manière d'une balle dans un canon de fusil.

Avantageusement, la roue est déséquilibrée par un poids disposé dans une première section de la roue et un contrepoids, de masse inférieure à la masse du poids, disposé dans une deuxième section de la roue opposée à la première section par l'axe. Le poids et le contrepoids permettent à la roue, une fois lancée, de tourner avec de faibles pertes de vitesse en utilisant la force de gravité.

Selon un deuxième aspect, l'invention concerne un circuit de transport de fluide comportant un dispositif de production d'énergie mécanique selon l'invention, le circuit comportant en outre un surpresseur disposé en amont du dispositif dans le sens de circulation du fluide.

### BREVE DESCRIPTION DES FIGURES

D'autres avantages, buts et caractéristiques de l'invention ressortiront de la description qui va suivre, faite dans un but explicatif et nullement limitatif en regard des dessins annexés. Ces dessins montrent :
Figure 1 : une représentation schématique d'un circuit de transport de liquide sous pression comprenant trois dispositifs de production d'énergie mécanique selon l'invention ;
Figure 2 : une représentation schématique d'un circuit de transport de gaz sous pression comprenant trois dispositifs de production d'énergie mécanique selon l'invention ;
Figure 3 : une représentation schématique en coupe et en vue de face d'un dispositif de production d'énergie mécanique selon un premier mode de réalisation de l'invention ;
Figure 4 : une représentation schématique en coupe et en vue de face d'un dispositif de production d'énergie mécanique selon un deuxième mode de réalisation de l'invention ;
Figure 5 : une représentation schématique en vue de dessus d'une roue du dispositif de production d'énergie mécanique de la Figure 3 ; et
Figure 6 : une représentation schématique en coupe et en vue de côté d'une roue du dispositif de production d'énergie mécanique de la Figure 3.

Les éléments identiques, similaires ou analogues, conservent les mêmes références d'une figure à l'autre.

### DESCRIPTION D'EXEMPLES DE REALISATION DE L'INVENTION

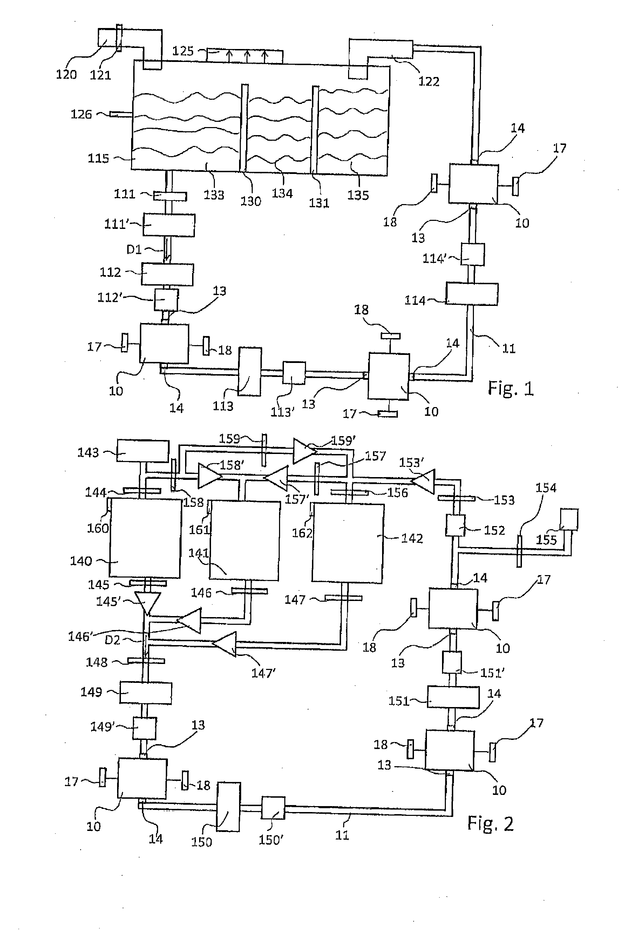

La Figure 1 montre un circuit de transport de fluide 11 canalisant la circulation d'un liquide contenu dans un réservoir 115 pour alimenter trois dispositifs 10 de production d'énergie mécanique. Chaque dispositif 10 comporte une arrivée de fluide 13 et une sortie d'écoulement 14 ainsi que deux moyens de transmission d'énergie 17, 18. En variante, un dispositif 10 peut comporter plusieurs arrivées de fluide 13 et/ou plusieurs sorties d'écoulement 14.

Le liquide s'écoule dans le circuit 11 dans le sens D1. En sortie du réservoir 115, le circuit 11 comporte une vanne 111 permettant de fermer ou d'ouvrir la circulation du liquide dans le circuit 11. Le liquide traversant la vanne 111 s'écoule dans une pompe 111' puis dans un premier surpresseur 112 apte à augmenter la pression dans le circuit au niveau de l'arrivée de fluide 13 du premier dispositif 10. Le premier surpresseur 112 est relié à l'arrivée de fluide 13. Un capteur de pression 112' est installé entre le premier surpresseur 112 et l'arrivé de fluide 13. Le capteur de pression 112' est apte à mesurer la pression du circuit 11 entre le premier surpresseur 112 et l'arrivée de fluide 13. La sortie d'écoulement 14 du premier dispositif 10 est reliée à l'arrivée de fluide 13 du deuxième dispositif 10 par l'intermédiaire d'un deuxième surpresseur 113 en série avec un capteur de pression 113'. La sortie d'écoulement 14 du deuxième dispositif 10 est reliée à l'arrivée de fluide 13 du troisième dispositif 10 par l'intermédiaire d'un troisième surpresseur 114 en série avec un capteur de pression 114'. La sortie d'écoulement 14 du troisième dispositif 10 est reliée au réservoir 115 par un moyen de dépression 122 apte à diminuer la pression du liquide pénétrant dans le réservoir 115.

Le réservoir 115 comporte une ouverture 125 ménagée sur le dessus du réservoir 115 ainsi que trois compartiments 133, 134 et 135 séparés par deux cloisons 130, 131. Les deux cloisons 130, 131 ne s'étendent pas sur toute la hauteur du réservoir 115. Le trop plein du troisième compartiment 135 s'écoule par-dessus la deuxième cloison 131 jusqu'au deuxième compartiment 134 permettant ainsi de diminuer la pression du liquide entre le deuxième et le troisième compartiment. Le trop plein du deuxième compartiment 134 s'écoule par-dessus la première cloison 130 jusqu'au premier compartiment 133 permettant ainsi de diminuer la pression du liquide entre le premier et le deuxième compartiment. Les compartiments 133-135 permettent ainsi de réduire les turbulences générées par le retour du fluide vers le réservoir 115. En variante, les cloisons 130, 131 peuvent s'étendre sur toute la hauteur du réservoir 115 et ces cloisons 130, 131 peuvent être munies de trous aptes à réaliser le même effet technique.

Le réservoir 115 comporte en outre une arrivée 120 de liquide associée à une vanne 121 destinée à autoriser le remplissage du réservoir 115 depuis l'arrivée 120 de liquide. Un capteur de niveau 126 permet de contrôler le niveau du liquide dans le premier compartiment 133.

La Figure 2 montre un circuit de transport de fluide 11 permettant la circulation d'un gaz contenu dans trois réservoirs 140, 141, 142 pour alimenter trois dispositifs 10 de production d'énergie mécanique similaires à ceux de la Figure 1.

Le gaz se propage dans le circuit 11 dans le sens D2. En sortie des réservoirs 140, 141, 142, le circuit 11 comporte une vanne 148 permettant de fermer ou d'ouvrir la propagation du gaz dans le circuit 11. Le gaz traversant la vanne 148 se propage dans un premier surpresseur 149 apte à augmenter la pression dans le circuit 11 au niveau de l'arrivée de fluide 13 du premier dispositif 10. Un premier capteur de pression 149' est disposé entre l'arrivée de fluide 13 du premier dispositif 10 et le premier surpresseur 152. La sortie d'écoulement 14 du premier dispositif 10 est reliée à l'arrivée de fluide 13 du deuxième dispositif 10 par l'intermédiaire d'un deuxième surpresseur 150 en série avec un capteur de pression 150'. La sortie d'écoulement 14 du deuxième dispositif 10 est reliée à l'arrivée de fluide 13 du troisième dispositif 10 par l'intermédiaire d'un troisième surpresseur 151 en série avec un capteur de pression 151'.

La sortie d'écoulement 14 du troisième dispositif 10 est reliée d'une part à un dispositif d'évacuation de gaz 155 par l'intermédiaire d'une vanne 154. Le dispositif de purge 155 permet l'évacuation du gaz contenu dans le circuit 11 par exemple pour une opération de maintenance (purge) ou pour une utilisation sans recyclage du gaz contenu dans les réservoirs 140-142. D'autre part, la sortie d'écoulement 14 du troisième dispositif 10 est reliée au deuxième 141 et au troisième 142 réservoir par l'intermédiaire d'une vanne 153 en série avec un clapet anti-retour 153' évitant que le gaz des réservoirs 140-142 ne se propage dans le circuit 11. Un capteur de pression 152 est disposé entre la vanne 153 et la sortie d'écoulement 14 du troisième dispositif 10. Le deuxième 141 ou le troisième 142 réservoir est sélectionné par deux vannes 156, 157 fonctionnant en complémentarité. Ainsi, lorsque la première vanne 156 est ouverte, la deuxième vanne 157 est fermée et le gaz du circuit 11 est dirigé vers le troisième réservoir 142. Lorsque la première vanne 156 est fermée, la deuxième vanne 157 est ouverte et le gaz du circuit 11 est dirigé vers le deuxième réservoir 141 en passant par un clapet 157' anti-retour évitant que le gaz du second réservoir 141 ne se propage dans le circuit 11 dans la direction invention au sens de propagation D2. La sortie de chaque réservoir 140, 141, 142 est reliée au circuit 11 par l'intermédiaire d'une vanne 145, 146, 147 en série avec un clapet 145', 146', 147' anti-retour.

Les réservoirs 140-142 peuvent être remplis par une pompe 143 et chaque réservoir 140-142 possède un indicateur de pression 160-162. A cet effet, trois vannes 144, 158, 159 commandent le remplissage de l'un ou l'autre des réservoirs 140-142. Deux clapets anti-retour 158' et 159' évitent que le gaz ne s'échappe respectivement du deuxième 141 et du troisième 142 réservoir en direction de la pompe 143. Lorsque la pression est trop faible dans les réservoirs 140-142, les réservoirs 140-142 peuvent être échangés avec des réservoirs de plus haute pression.

Les Figures 1 et 2 montrent deux exemples de circuits 11 de transport de fluide comportant trois dispositifs 10 de production d'énergie mécanique. En variante, le circuit 11 peut comporter un ou plusieurs dispositifs 10 et la topologie et les éléments du circuit peuvent être différents. Par exemple, le circuit 11 peut être en boucle fermé. Dans un autre exemple, partant de la Figure 2, le premier dispositif 10 peut comporter trois entrées 13 chacune reliée à un réservoir 140-142. Les entrées 13 peuvent être utilisées séparément ou simultanément par un système de vannes et de clapets anti-retour.

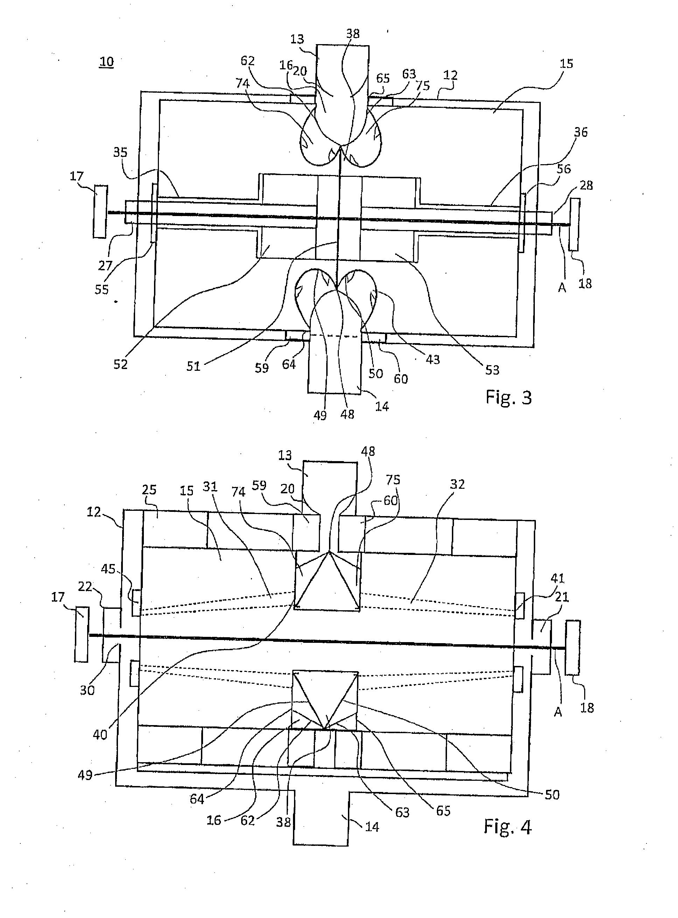

La Figure 3 montre un dispositif 10 de production d'énergie mécanique selon un premier mode de réalisation de l'invention. Le dispositif 10 comporte un carter 12 muni d'une arrivée de fluide 13 et une sortie d'écoulement 14 destinées à être disposées entre deux connexions du circuit de transport de fluide 11 sous pression. Une roue 15, reliée à un axe A, est mobile en rotation à l'intérieur du carter 12.

L'axe A est relié d'une part à la roue 15 et d'autre part à deux moyens de transmission d'énergie 17, 18 disposés de part et d'autre du carter 12. La roue 15 est montée à l'aide de roulements sur deux tubes 27, 28 fixés sur le carter 12. La roue 15 comporte deux chambres cylindriques reliées par une chambre centrale et débouchant sur un bord de la roue 15 au niveau de l'axe A. Les parois interne 35, 36 des deux chambres cylindriques de la roue 15 ne touchent pas l'axe A ni les tubes 27, 28. La roue 15 est maintenue au niveau de la chambre centrale par des moyens de roulements 52, 53. La chambre centrale comporte également un moyen de fixation 51 de la roue 15 avec l'axe A. Des moyens d'étanchéité 55, 56 sont disposés sur les cotés de la roue 15 autour des tubes 27, 28 pour garantir l'étanchéité des chambres cylindriques. Ces moyens d'étanchéité peuvent être des joints tresses compressés ou tous autres moyens connus. D'autres moyens d'étanchéité 59, 60 peuvent être disposés circulairement autour de la roue 15 entre la roue 15 et une paroi du carter 12 de chaque cotés de l'arrivée de fluide 13 et de la sortie d'écoulement 14. En variante, le dispositif 10 peut comporter un seul moyen de transmission d'énergie et la disposition du ou des moyens de transmission d'énergie peut être variable.

La roue 15 comporte un couteau de répartition 38 s'étendant radialement dans un canal central 16 de la roue 15. Le couteau de répartition 38 comporte un fil 48 apte à diviser le fluide provenant de l'arrivée de fluide 13 entre deux faces 49, 50 du couteau de répartition 38. Chaque face 49, 50 s'étend depuis le fil 48 jusqu'à un bord 64, 65 du canal central 16. De préférence, les faces 49, 50 comportent un profil curviligne de sorte à guider le fluide le long de chaque face 49, 50 et d'éviter les angles de jaillissement du fluide. Les faces 49, 50 comprennent des arrêtes 62, 63 s'étendant entre le fil 48 et les bords 64, 65 pour former deux butées d'appui 74, 75 aptes à recevoir une énergie cinétique du fluide pour déplacer la roue 15. Les faces 49, 50 peuvent également comporter des dentures 43 faisant sailli de leurs parois de sorte à emmagasiner une partie de l'énergie cinétique du fluide pour déplacer la roue 15. De préférence, les arrêtes 62, 63 comporte également un profil curviligne de sorte à guider le fluide depuis le fil 48 jusqu'aux bords 64, 65 de chaque face 49, 50 en évitant les jaillissements du fluide.

En variante, l'arrivée de fluide 13 peut comporter un moyen d'augmentation 20 de la pression par un rétrécissement du canal de l'arrivée de fluide 13.

En variante, l'arrivée de fluide 13 peut être démultipliée en plusieurs entrées aptes à diriger le fluide sur la roue 15. La roue 15 peut alors comporter plusieurs couteaux de répartition 38 positionnés dans des canaux centraux différents réalisés face aux différentes entrées. La roue 15 peut également comporter un seul couteau de répartition 38 apte à répartir le fluide de plusieurs entrées. Dans ce cas, les entrées peuvent être positionnées dans l'alignement du fil 48 du couteau de répartition 38 ou sur les faces 49-50 du couteau de répartition 38. Dans le cas d'un positionnement des entrées sur les faces 49-50 du couteau de répartition 38, les entrées sont préférentiellement positionnées par paires symétriques de chaque coté 49-50 du couteau de répartition 38 pour maintenir une stabilité de la roue 15.

Les Figures 3 à 5 montrent un dispositif 10 selon un deuxième mode de réalisation de l'invention. Dans ce mode de réalisation, l'axe A traverse des ouvertures périphériques 30 ménagées dans une cloison du carter 12 entre les moyens de transmission d'énergie 17, 18 et la roue 15. Afin de garantir l'étanchéité du carter 12, des chambres d'étanchéité 22 peuvent être disposées à l'extérieur du carter 12 au niveau des ouvertures périphériques 30. Les chambres d'étanchéité 22 comportent préférentiellement un joint tresse 21 dont la compression assure l'étanchéité.

Les mouvements de la roue 15 à l'intérieur du carter 12 sont guidés par des moyens de roulement 25 disposés circulairement autour de la roue 15 entre la paroi interne du carter 12 et la paroi externe de la roue 15. Préférentiellement, les moyens de roulement 25 sont disposés aux extrémités de la roue 15. Des joints tresses ou d'autres moyens connus peuvent être disposés de part et d'autre des moyens de roulement 25 pour assurer l'étanchéité des moyens de roulement 25 sans faire obstacle à leurs fonctionnements.

Le fluide du circuit de transport de fluide 11 sous pression s'écoule à l'intérieure du carter 12 depuis l'arrivée de fluide 13 vers un canal central 16 de la roue 15 dans laquelle un couteau de répartition 38 dirige le fluide vers des canaux latéraux 31, 32 débouchant sur un bord de la roue 15. Dans ce deuxième mode de réalisation, le fluide est récupéré dans deux côtés de la roue 15 et canalisé vers la sortie d'écoulement 14 alors que dans le premier mode de réalisation, le fluide était canalisé dans la rainure centrale 16 jusqu'à la sortie d'écoulement.

Plus précisément, le couteau de répartition 38 comprend des faces 49, 50 inclinées entre deux arrêtes 62, 63 et 72, 73 pour diriger le fluide vers les canaux latéraux 31, 32 disposés à l'intérieur de la roue 15. Le couteau de répartition 38 s'étend depuis le fond du canal central 16 sur une hauteur légèrement inférieure à la profondeur du canal central 16. La Figure 4 montre des arrêtes 62, 63 et 72, 73 orientées radialement par rapport au fil 48 du couteau de répartition 38 avec un angle α1 compris préférentiellement entre 30 et 60 degrés. Les faces 49, 50 comportent plusieurs sections S49, S50 délimités par les arrêtes 62, 63 et 72, 73. Les arrêtes 62, 63 et les arrêtes 72, 73 délimitent deux sections S49, S50. Les deux sections S49, S50 comportent une pente P1, P2 dont le point haut se situe à l'intersection entre les arrêtes 62, 63 et le fil 48 et dont le point bas se situe à l'intersection entre les arrêtes 72, 73 et le bord 64, 65 de chaque face 49, 50. Cette pente P1, P2, comportant un angle compris préférentiellement entre 30 et 60 degrés, permet de guider le fluide vers une butée d'appui 74, 75 des arrêtes 72, 73 pour entrainer la roue 15 dans le sens des pentes P1, P2 et également de diriger le fluide vers les canaux latéraux 31, 32 destinés à l'évacuation du fluide des sections S49, S50.

Les canaux latéraux 31, 32 prennent naissance entre les arrêtes 72, 73 et les bords 64, 65 des faces 49, 50 sous la forme d'une section d'entrée 40 sensiblement circulaire. Les canaux latéraux 31, 32 débouchent sur un côté de la roue 15 sous la forme d'une section de sortie 41 sensiblement circulaire. Préférentiellement, la section d'entrée 40 est supérieure à la section de sortie 41 de sorte que le fluide soit accéléré entre les sections d'entrée 40 et de sortie 41. Les canaux latéraux 31, 32 peuvent comporter une rainure de guidage ménagée à l'intérieur des canaux latéraux 31, 32 suivant une disposition hélicoïdale. La sortie de chaque canal latéral 31, 32 peut être reliée à une tuyère d'évacuation 45 fixée sur le côté de la roue 15 et orientée dans la direction inverse au sens de déplacement de la roue 15 de sorte à utiliser la poussée du fluide en sortie des canaux latéraux 31, 32 pour déplacer la roue 15.

En variante, les canaux latéraux 31, 32 peuvent déboucher sur des collecteurs de fluide ménagés dans la roue 15 et reliés à la sortie d'écoulement 14 de sorte que le fluide circule depuis le canal central 16 vers la sortie d'écoulement 14 en passant par les collecteurs de fluide. Cette variante permet d'éviter la circulation du fluide sur les cotés de la roue 15. De préférence, chaque collecteur de fluide est réalisé par une rainure ménagée circulairement autour de la roue 15.

De plus, lorsque l'arrivée de fluide 13 est démultipliée en plusieurs entrées aptes à diriger le fluide sur la roue 15, la roue 15 peut comporter plusieurs couteaux de répartition 38 disposés dans plusieurs canaux 16. Entre les différents canaux 16, la roue 15 comporte alors des collecteurs de fluide.

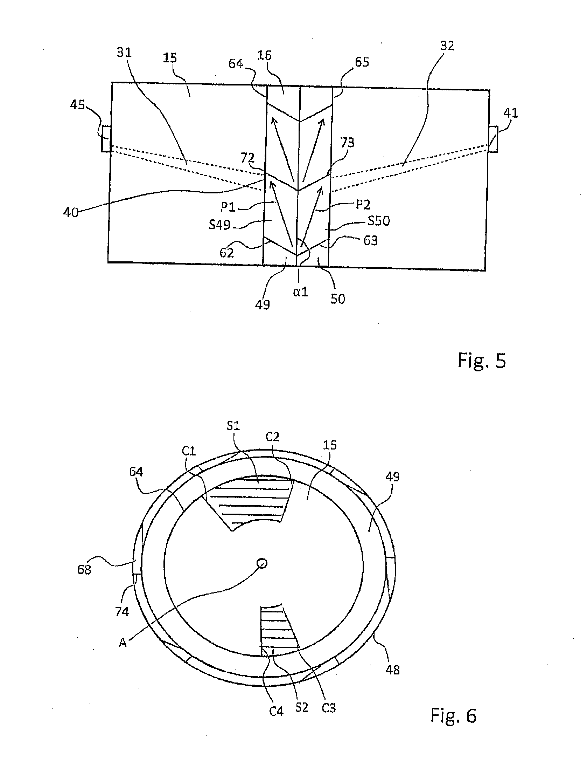

La Figure 5 montre une vue en coupe réalisée sensiblement au centre de la roue 15. Le fil 48 du couteau de répartition 38 comporte une encoche 68 dont un bord forme une intersection entre les butées d'appui 74, 75 des arrêtes 62, 63 reliant les faces 49, 50. De préférence, l'arrivée de fluide 13 est orientée avec un angle de 30 degrés par rapport au fil 48 du couteau de répartition 38 et vient percuter le bord de l'encoche 68. Ce bord pour être émoussé et renforcé pour éviter les dégradations de l'érosion.

La Figure 5 montre également que la roue 15 comporte deux sections S1-S2 ménagées à l'intérieur de la roue 15 entres les canaux latéraux 31, 32 et sous le canal central 16. Chaque section S1, S2 est délimitée par deux cloisons C1-C4 entre lesquelles des poids sont contenus. Plus précisément, un poids est contenu entre les cloisons C1, C2 dans la section S1 et un contrepoids est contenu entre les cloisons C3, C4 dans la section S2. Le poids et le contrepoids peuvent être réalisés par des billes métalliques ou des plaques de métal. La première section S1 et plus grande que la deuxième section S2 de sorte que le poids comporte une masse plus importante que le contrepoids. Lorsque la roue 15 est en mouvement, le poids et le contrepoids entraine la rotation de la roue 15 par la force de la gravité et de l'inertie de la roue 15. La rotation de la roue 15 est freinée par la résistance induite par les moyens de transmission d'énergie 17, 18 et les frottements de la roue 15. Le mouvement de rotation de la roue 15 entrainée par le poids et le contrepoids présente ainsi un amortissement plus faible qu'une roue 15 classique. En variante, les poids et contrepoids peuvent être installés à d'autres endroits de la roue 15 tout en conservant leurs propriétés.

La roue 15 peut également comporter un système d'amorçage pour augmenter la vitesse de la roue 15 au démarrage de celle-ci. Ledit système d'amorçage peut être de tous les types connus, par exemple un détendeur à ressort, une machine à explosion ou un entrainement par un moteur thermique ou électrique.

L'invention permet ainsi de produire une énergie mécanique à partir d'un circuit de transport de fluide 11 avec une pression quasi-constante entre l'arrivée de fluide 13 et la sortie d'écoulement 14. De plus, le déséquilibre de la roue 15 avec un poids et un contrepoids permet de contribuer à la conservation du mouvement de rotation de la roue 15.

## Revendications

1. Dispositif de production d'énergie électrique (10) d'un circuit de transport de fluide (11) sous pression comportant :
- un carter (12) comprenant une arrivée de fluide (13) et une sortie d'écoulement (14) reliées étanchement au circuit de transport de fluide (11) sous pression,
- une roue (15) fixée à un axe (A) et mobile en rotation à l'intérieur du carter (12), et
- un alternateur (17, 18), entrainé par l'axe (A) de la roue (15), apte à convertir l'énergie mécanique de rotation de la roue (15) en énergie électrique,
**caractérisé en ce qu'il** comporte en outre :
- un canal central (16) ménagé circulairement autour de la roue (15), et
- un couteau de répartition (38) contenu dans le canal central (16) s'étendant radialement par rapport à la roue (15) et adapté circulairement autour de la roue (15), le couteau de répartition (38) comportant deux faces (49, 50) reliées par un fil (48) apte à répartir le fluide provenant de l'arrivé de fluide (13) sur les deux faces (49, 50),
- chaque face (49, 50) comportant au moins une arrête (62, 63) formant une butée d'appui (74, 75) et s'étendant depuis le fil (48) jusqu'à un bord (64, 65) de la face (49, 50).

2. Dispositif selon la revendication 1, **caractérisé en ce que** la hauteur du couteau de répartition (38) est légèrement inférieure à la profondeur du canal central (16) de la roue (15).

3. Dispositif selon la revendication 1 ou 2, **caractérisé en ce que** chaque arrête (62, 63) est orientée radialement par rapport au fil (48) avec un angle (α1) compris entre 30 et 60 degrés.

4. Dispositif selon l'une des revendications 1 à 3, **caractérisé en ce que** le fil (48) comporte une encoche (68) dont un bord forme une intersection entre les butées d'appui (74, 75) des arrêtes (62, 63) reliant les faces (49, 50).

5. Dispositif selon l'une des revendications 1 à 4, **caractérisé en ce que** chaque face (49, 50) comporte des dentures (43) faisant saillie de la paroi de la face (49, 50).

6. Dispositif selon l'une des revendications 1 à 5, **caractérisé en ce que**, chaque face (49, 50) comportant plusieurs arrêtes (62, 63), chaque section (S49, S50) d'une face (49, 50) disposée entre une première arrête (62, 63) et une deuxième arrête (72, 73) comporte une pente (P1, P2) dont le point haut est situé à l'intersection entre la première arrête (62, 63) et le fil (48) et dont le point bas est situé à l'intersection entre la deuxième arrête (72, 73) et le bord (64, 65) de la face (49, 50).

7. Dispositif selon la revendication 6, **caractérisé en ce que** la roue comporte des canaux latéraux (31, 32) prenant naissance à l'intersection entre la deuxième arrête (72, 73) et le bord (64, 65) de la face (49, 50) et débouchant sur un coté de la roue (15).

8. Dispositif selon la revendication 6 ou 7, **caractérisé en ce que,** chaque canal latéral (31, 32) comportant une section d'entrée (40) au niveau de l'intersection entre la deuxième arrête (72, 73) et le bord (64, 65) de la face (49, 50) et une section de sortie (41) au niveau du coté de la roue (15), la section d'entrée (40) est supérieure à la section de sortie (41).

9. Dispositif selon l'une des revendications 6 à 8, **caractérisé en ce qu'**une sortie de chaque canal latéral (31, 32) comporte une tuyère d'évacuation (45), fixée sur le coté de la roue (15) et orientée suivant la direction inverse du sens de déplacement de la roue (15).

10. Dispositif selon l'une des revendications 1 à 9, **caractérisé en ce que** la roue (15) est déséquilibrée par un poids disposé dans une première section (S1) de la roue (15) et un contrepoids, de masse inférieure à la masse du poids, disposé dans une deuxième section (S2) de la roue (15) opposée à la première section (S1) par l'axe (A).

## Patentansprüche

1. Stromerzeugungsvorrichtung (10) eines Fluidtransportkreislaufs (11) unter Druck, umfassend:
- ein Gehäuse (12), das einen Fluideinlass (13) und einen Strömungsauslass (14) aufweist, die hermetisch dicht mit dem Fluidtransportkreislauf (11) unter Druck verbunden sind,
- ein Rad (15), das an einer Achse (A) und drehbar innerhalb des Gehäuses (12) angeordnet ist, und
- einen Generator (17, 18), der von der Achse (A) des Rades (15) angetriebenen ist, der geeignet ist, die mechanische Energie der Rotation des Rades (15) in elektrische Energie umzuwandeln, **dadurch gekennzeichnet, dass** sie außerdem Folgendes aufweist:
- einen zentralen Kanal (16), der kreisförmig um das Rad (15) angeordnet ist, und
- ein Trennblech (38), das in dem zentralen Kanal (16) enthalten ist, das sich radial in Bezug auf das Rad (15) erstreckt und kreisförmig um das Rad (15) angepasst ist, wobei das Trennblech (38) zwei Seiten (49, 50) aufweist, die durch einen Draht (48) verbunden sind, der geeignet ist, das Fluid, das aus dem Fluideinlass (13) kommt, auf den beiden Seiten (49, 50) zu verteilen,
- wobei jede Seite (49, 50) mindestens einen Anschlag (62, 63) aufweist, der einen Stützanschlag (74, 75) bildet und sich von dem Draht (48) bis zu einer Kante (64, 65) der Seite (49, 50) erstreckt.

2. Vorrichtung nach Anspruch 1, **dadurch gekennzeichnet, dass** die Höhe des Trennblechs (38) etwas geringer als die Tiefe des zentralen Kanals (16) des Rades (15) ist.

3. Vorrichtung nach Anspruch 1 oder 2, **dadurch gekennzeichnet, dass** jeder Anschlag (62, 63) radial gegenüber dem Draht (48) in einem Winkel (α1) zwischen 30 und 60 Grad orientiert ist.

4. Vorrichtung nach einem der Ansprüche 1 bis 3, **dadurch gekennzeichnet, dass** der Draht (48) eine Kerbe (68) aufweist, von der eine Kante eine Schnittstelle zwischen den Stützanschlägen (74, 75) der Anschläge (62, 63) bildet, die die Seiten (49, 50) verbinden.

5. Vorrichtung nach einem der Ansprüche 1 bis 4, **dadurch gekennzeichnet, dass** jede Seite (49, 50) Verzahnungen (43) aufweist, die von der Wand der Seite (49, 50) vorstehen.

6. Vorrichtung nach einem der Ansprüche 1 bis 5, **dadurch gekennzeichnet, dass**, wobei jede Seite (49, 50) mehrere Anschläge (62, 63) aufweist, jeder Abschnitt (S49, S50) einer Seite (49, 50), der zwischen einem ersten Anschlag (62, 63) und einem zweiten Anschlag (72, 73) angeordnet ist, eine Schräge (P1, P2) aufweist, deren höchster Punkt an der Schnittstelle zwischen dem ersten Anschlag (62, 63) und dem Draht (48) angeordnet ist und deren niedrigster Punkt an der Schnittstelle zwischen dem zweiten Anschlag (72, 73) und der Kante (64, 65) der Seite (49, 50) angeordnet ist.

7. Vorrichtung nach Anspruch 6, **dadurch gekennzeichnet, dass** das Rad seitliche Kanäle (31, 32) aufweist, die an der Schnittstelle zwischen dem zweiten Anschlag (72, 73) und der Kante (64, 65) der Seite (49, 50) entstehen und zu einer Seite des Rades (15) führen.

8. Vorrichtung nach Anspruch 6 oder 7, **dadurch gekennzeichnet, dass**, wobei jeder seitliche Kanal (31, 32) einen Einlassabschnitt (40) an der Schnittstelle zwischen dem zweiten Anschlag (72, 73) und der Kante (64, 65) der Seite (49, 50) und einen Auslassabschnitt (41) an der Seite des Rades (15) aufweist, der Einlassabschnitt (40) größer als der Auslassabschnitt (41) ist.

9. Vorrichtung nach einem der Ansprüche 6 bis 8, **dadurch gekennzeichnet, dass** ein Austritt von jedem seitlichen Kanal (31, 32) eine Austrittsdüse (45) aufweist, die an der Seite des Rades (15) befestigt ist und längs der entgegengesetzten Richtung zur Laufrichtung des Rades (15) orientiert ist.

10. Vorrichtung nach einem der Ansprüche 1 bis 9, **dadurch gekennzeichnet, dass** das Rad (15) durch ein Gewicht, das in einem ersten Abschnitt (S1) des Rades (15) angeordnet ist, und ein Gegengewicht, das eine niedrigere Masse als die Masse des Gewichtes aufweist, das in einem zweiten Abschnitt (S2) des Rades (15) angeordnet ist, der dem ersten Abschnitt (S1) durch die Achse (A) gegenüberliegt, aus dem Gleichgewicht gebracht ist.

## Claims

1. Device for producing electrical energy (10) for a pressurized fluid transport circuit (11) comprising:
- a housing (12) comprising a fluid inlet (13) and a flow outlet (14) linked in a leak-tight manner to the pressurized fluid transport circuit (11),
- a wheel (15) fixed to an axis (A) and that can move in rotation inside the housing (12), and
- an alternator (17, 18), driven by the axis (A) of the wheel (15), suitable for converting the mechanical rotational energy of the wheel (15) into electrical energy,
**characterized in that** it further comprises:
- a central channel (15) formed circularly around the wheel (15), and
- a distribution blade (38) contained in the central channel (16) extending radially relative to the wheel (15) and adapted circularly around the wheel (15), the distribution blade (38) comprising two faces (49, 50) linked by a wire (48) suitable for distributing the fluid originating from the fluid inlet (13) over the two faces (49, 50),
- each face (49, 50) comprising at least one edge (62, 63) forming a bearing abutment (74, 75) and extending from the wire (48) to an edge (64, 65) of the face (49, 50).

2. Device according to Claim 1, **characterized in that** the height of the distribution blade (38) is slightly less than the depth of the central channel (16) of the wheel (15).

3. Device according to Claim 1 or 2, **characterized in that** each edge (62, 63) is oriented radially relative to the wire (48) with an angle (α1) of between 30 and 60 degrees.

4. Device according to one of Claims 1 to 3, **characterized in that** the wire (48) comprises a notch (68) one edge of which forms an intersection between the bearing abutments (74, 75) of the edges (62, 63) linking the faces (49, 50).

5. Device according to one of Claims 1 to 4, **characterized in that** each face (49, 50) comprises teeth (43) protruding from the wall of the face (49, 50).

6. Device according to one of Claims 1 to 5, **characterized in that**, each face (49, 50) comprising a number of edges (62, 63), each section (S49, S50) of a face (49, 50) arranged between a first edge (62, 63) and a second edge (72, 73) comprises a slope (P1, P2) the top of which is situated at the intersection between the first edge (62, 63) and the wire (48) and the bottom point of which is situated at the intersection between the second edge (72, 73) and the edge (64, 65) of the face (49, 50).

7. Device according to Claim 6, **characterized in that** the wheel comprises lateral channels (31, 32) starting at the intersection between the second edge (72, 73) and the edge (64, 65) of the face (49, 50) and emerging on one side of the wheel (15).

8. Device according to Claim 6 or 7, **characterized in that**, each lateral channel (31, 32) comprising an inlet section (40) at the intersection between the second edge (72, 73) and the edge (64, 65) of the face (49, 50) and an outlet section (41) on the side of the wheel (15), the inlet section (40) is greater than the outlet section (41).

9. Device according to one of Claims 6 to 8, **characterized in that** an outlet of each lateral channel (31, 32) comprises a discharge nozzle (45), fixed onto the side of the wheel (15) and oriented in the reverse direction to the direction of displacement of the wheel (15).

10. Device according to one of Claims 1 to 9, **characterized in that** the wheel (15) is unbalanced by a weight positioned in a first section (S1) of the wheel (15) and a counterweight, of mass less than the mass of the weight, positioned in a second section (S2) of the wheel (15) opposite the first section (S1) through the axis (A).
